# EUROPÄISCHE PATENTSCHRIFT

(11) **EP 1 238 613 B1**
(45) Veröffentlichungstag und Bekanntmachung des Hinweises auf die Patenterteilung: **16.03.2005**
(21) Anmeldenummer: 02002385.9
(22) Anmeldetag: 31.01.2002
(51) Int. Cl.: A47J 27/08

(54) **Vorrichtung und Verfahren zur Dampfkondensation in einem Druckgargerät**
Apparatus and process for steam condensation in a pressure cooker
Appareil et procédé pour la condensation de vapeur dans un autocuiseur

(30) Priorität: 09.03.2001 DE 10111436
(43) Veröffentlichungstag der Anmeldung: 11.09.2002
(73) Patentinhaber: Lohberger Heiz- und Kochgeräte Technologie GmbH, 5231 Schalchen (AT)
(72) Erfinder: Owsianski, Reiner, 29336 Nienhagen (DE)
(74) Vertreter: Schoppe, Fritz, Dipl.-Ing.

(56) Entgegenhaltungen:
- DE-A- 2 632 916
- US-A- 2 495 603
- US-A- 2 555 230
- US-A- 3 897 818

## Beschreibung

Die vorliegende Erfindung bezieht sich auf Druckgargeräte, wie sie insbesondere in Großküchen verwendet werden, und insbesondere auf die Dampfkondensation am Ende des Garvorganges.

Bei Druckgargeräten wie Dampfkochtöpfen, Druckkochkesseln oder Druckgarpfannen, wie sie in Großküchen, teilweise aber auch in Einzelhaushalten verwendet werden, wird ein schnelleres Garen dadurch erreicht, daß in einem druckfest geschlossenen Garraum Wasserdampf erzeugt wird der im Garraum zu einem Druckanstieg über den Umgebungsdruck führt. Der erhöhte Druck wiederum bedingt einen erhöhten Siedepunkt von Wasser, der bei Normaldruck ca. 100°C beträgt. Der Garvorgang im Druckgargerät findet deshalb bei einer gegenüber dem Garvorgang in einem offenen, d. h. nicht druckfest verschlossenen Gargerät erhöhten Temperatur statt. Wegen der erhöhten Gartemperatur verkürzt sich die erforderliche Gardauer. Daraus ergeben sich Vorteile bezüglich der Erhaltung verschiedener Inhaltsstoffe des Gargutes während des Garvorganges sowie wirtschaftliche Vorteile. Dadurch wird die Garzeit deutlich reduziert.

Nach Beendigung des Garvorganges kann der Garraum nicht sofort geöffnet werden, da der erhöhte Druck sich explosionsartig entspannen und das Gargut aus dem Garraum mitreißen würde. Der Druck muß daher vor Öffnen des Gerätes auf den Umgebungsdruck abgebaut werden. Entsprechend des Zeitgewinns durch kurze Garzeiten bei Druckgargeräten sollte auch dieser Druckabbau in möglichst kurzer Zeit erfolgen. Übliche Verfahren zeichnen sich dadurch aus, daß Kühlwasser in die doppelwandig ausgeführten Seitenwände des Garraumes geleitet wird. An den so gekühlten Seitenwänden des Garraumes kondensiert der Sattdampf, der sich im Garraum befindet. Entsprechend der Abnahme des Dampfgehaltes an der Gesamtwassermenge, die im Garraum vorhanden ist, vermindern sich Druck und Temperatur im Garraum. Wenn der Umgebungsdruck erreicht ist, verhindert ein automatisches Belüftungsventil einen weiteren Druckabfall und der Deckel kann geöffnet werden.

Das beschriebene Verfahren wird als Mantelkühlverfahren bezeichnet und dauert je nach der Wassermenge, die im Garraum enthalten ist, und dem Volumen des Garraumes bis zu 10 Minuten. Damit liefert die zum Kühlen des Garraumes bzw. Abbauen des Dampfdruckes im Garraum nach dem eigentlichen Garvorgang erforderliche Zeit einen erheblichen Beitrag zur Zeitdauer des gesamten Garverfahrens. Ferner erzeugt das Mantelkühlverfahren einen erheblichen Frischwasserverbrauch. Das Mantelkühlverfahren ist deshalb sowohl in Hinsicht auf wirtschaftliche Aspekte als auch auf die Qualität des Garergebnisses nicht optimal.

Die DE 36158 C beschreibt einen Deckel für Kochgefäße mit einer doppelwandigen Struktur mit Kanälen, die von Wasser durchströmt werden.

Die DE 197 33 314 A1 beschreibt einen Dampfgarofen mit Dampfablöschung, bei dem in einem Dampfgarraum enthaltener Dampf vor einem Öffnen der Tür an einem Kondensationskörper kondensiert, wobei der Kondensationskörper durch eine Kühlfläche gebildet ist, die von einer Kühlflüssigkeit durchströmt wird.

Die US-A-2,555,230 beschreibt ein Druckgarverfahren, an dessen Ende die Dampfzufuhr zum Garraum abgeschaltet und Kühlwasser in den Garraum durch Sprühdüsen an der Innenseite eines Deckels eingesprüht sind.

Die DE 26 32 916 A1 beschreibt ein Verfahren und eine Vorrichtung zum Einkochen von Nahrungsmitteln unter Druck, wobei in einem Druckkessel einer Einkochapparatur eine Mehrzahl von Einweckgläsern mit Deckeln angeordnet sind, die zum Abkühlen und zur Erzeugung eines Unterdrucks mit Wasser besprüht werden.

Die US-A-3,897,818 beschreibt ein Verfahren und eine Vorrichtung zum Kühlen von Gegenständen in einer Dampfkammer, indem eine Kühlflüssigkeit direkt gegen die Behälter gesprüht wird, in denen das Gargut enthalten ist.

Die Aufgabe der vorliegenden Erfindung besteht darin, eine Vorrichtung und ein Verfahren zu schaffen, die einen schnelleren Dampfdruckabbau nach einem Druckgarprozess ermöglichen.

Diese Aufgabe wird durch ein Druckgargerät gemäß Anspruch 1 oder Anspruch 11 gelöst.

Der vorliegenden Erfindung liegt die Erkenntnis zugrunde, daß der Vorgang der Dampfkondensation bzw. des Druckabbaus im Garraum schneller abläuft, wenn eine Kühlwirkung möglichst direkt auf den Dampf ausgerichtet ist, anstatt primär auf große Teile der Garraumwände, die eine große Wärmekapazität aufweisen.

Das erfindungsgemäße Druckgargerät mit einem Garraum umfaßt eine obere Wand, wobei durch zumindest einen Abschnitt der oberen Wand ein Kühlmedium durchleitbar ist, oder eine Sprühdüse zum Einbringen eines Kühlmediums in den Garraum.

Das erfindungsgemäße verfahren zur Dampfkondensation in einem Druckgargerät mit einem Garraum umfaßt einen Schritt des Durchleitens eines Kühlmediums durch zumindest einen Abschnitt der oberen Wand des Garraumes oder einen Schritt des Einsprühens eines Kühlmediums in den Garraum.

Das Kühlen von zumindest einem Abschnitt der oberen Wand des Garraumes ist in Hinblick auf eine Abkühlung und Kondensation des Dampfes besonders wirksam, da sie ein besonders schnelles Einsetzen einer den Garraum weitgehend umfassenden Konvektion zur Folge hat, und sich so die Kühlwirkung schnell auf den gesamten Dampfinhalt des Garraumes erstreckt. Zur Kühlwirkung trägt ferner bei, daß an der gekühlten oberen Wand überwiegend Tröpfchenkondensation entsteht, die wesentlich effektiver ist, als die an den im Stand der Technik bekannten gekühlten Seitenwänden entstehende Filmkondensation. Ist die Kühlung der oberen Wand intensiv genug, so tropft die aus dem Dampf kondensierte Flüssigkeit von der oberen Wand herab. Die herabfallenden kühlen Tropfen übertragen mit ihrer großen Oberfläche die Wirkung der Kühlung der oberen Wand auf das gesamte von ihnen durchfallene Volumen des Garraumes. Es wird ein Druckabbau innerhalb einer halben bis maximal zwei Minuten erreicht. Der Frischwasserverbrauch vermindert sich je nach Größe des Druckgargerätes auf meist weniger als 10 Liter.

Eine ähnliche, aber noch schneller einsetzende Kühlwirkung auf den Dampfgehalt des Garraumes wird durch in den Garraum eingesprühtes Frischwasser erzielt. Da der Dampf schnell an der großen Gesamtoberfläche der kühlen Frischwassertröpfchen kondensiert, werden sein Druck und seine Temperatur in kurzer Zeit wirksam abgebaut. Da der absolute Dampfgehalt im Garraum nur Bruchteilen eines Liters (bei 0,4 bar Überdruck ca. 0,05 bis 0,2 Liter, je nach Größe und Befüllung) in flüssigem Zustand entspricht, wird für die Rückkühlung durch Einsprühen von Frischwasser ebenfalls nur ein kleines Kaltwasservolumen benötigt (ca. 1 bis 2 Liter). Ein Ansprühen der heißen Wandungen kann den Druckabbauprozeß noch beschleunigen, da das Dampf/Flüssigkeits-Gleichgewicht schneller in Richtung Flüssigkeit verschoben wird.

Eine zusätzliche Verbesserung bietet die Kombination aus einer Kühlung der oberen Wand des Garraumes und dem Einsprühen von Frischwasser. Dabei kann unter Umständen auf ein automatisches Gleichdruckventil verzichtet werden, das bei anderen Verfahren teilweise erforderlich ist, um ein erneutes Ansteigen des Dampfdruckes im Garraum aufgrund eines Nachverdampfens von Flüssigkeit an den noch heißen Garraumwänden zu verhindern.

Je nach Art der durchgeführten Kondensation in Kombination mit den weiteren Verfahren werden Rückkühlzeiten von wenigen Sekunden bis zu 3 Minuten bei einem nochmals deutlich verringerten Frischwasserverbrauch erreicht.

Bevorzugte Ausführungsbeispiele der vorliegenden Erfindung werden nachfolgend Bezug nehmend auf die beiliegenden zeichnungen näher erläutert. Es zeigen:
- Fig. 1: eine schematische Ansicht eines aufgeschnittenen Druckgargerätes mit einem Deckel, durch den ein Kühlmedium durchleitbar ist; und
- Fig. 2: eine schematische Ansicht eines aufgeschnittenen Druckgargerätes mit einer Sprühdüse zum Einbringen eines Kühlmediums in einem Garraum.

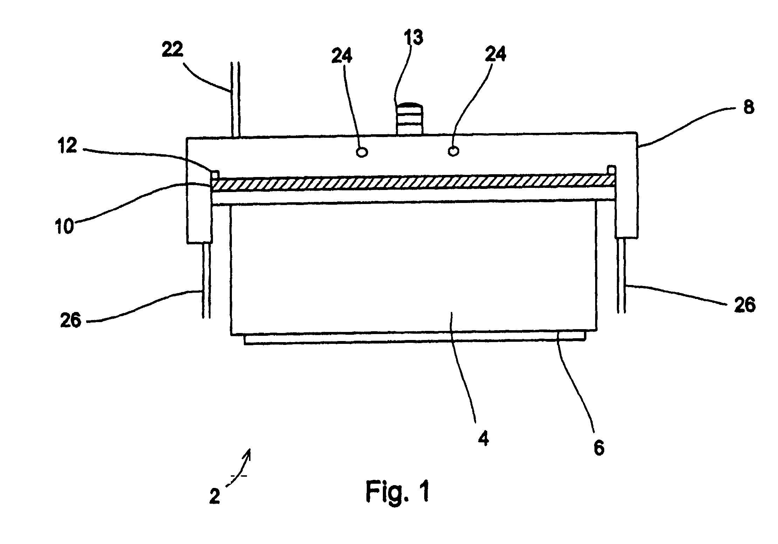

In Fig. 1 ist eine schematische Darstellung eines aufgeschnittenen Druckgargerätes 2, dessen Garraum 4 von einem Behälter 6 und einem Deckel 8 umschlossen ist. Zwischen dem Behälter 6 und dem Deckel 8 ist eine druckfeste Abdichtung vorgesehen, die hier durch eine Lippendichtung 10 in einer Nut 12 im Deckel 8 dargestellt ist. Der Deckel 8 ist mit dem Behälter 6 so angeordnet, daß er bei Überdruck im Garraum 4 druckdicht geschlossen ist. Das Druckgargerät gemäß Fig. 1 kann ferner ein Gleichdruckventil 13 zwischen dem Garraum 4 und der Umgebung aufweisen. Das Gleichdruckventil 13 wird nach dem Kondensieren des Dampfes bzw. dem Abbau des Druckes im Garraum geöffnet um einen erneuten Druckaufbau im Garraum durch ein Nachverdampfen der im Garraum enthaltenen Flüssigkeit an den noch heißen Wänden des Behälters bzw. an dem noch heißen Gargut im Garraum 4 zu verhindern. Das Druckgargerät 2 entspricht insoweit dem Stand der Technik und dient bestimmungsgemäß dazu, im Garraum 4 Gargut zusammen mit einer geeigneten Menge Wasser durch eine im Garraum angeordnete oder außerhalb des Garraumes angeordnete und mit dem Garraum wärmeleitfähig verbundene Heizquelle zu erhitzen (nicht dargestellt). Nach einer vorbestimmten Zeit ist der Garvorgang abgeschlossen und die Heizleistung der Heizvorrichtung wird abgeschaltet.

In dem in Fig. 1 dargestellten ersten Ausführungsbeispiel der vorliegenden Erfindung weist der Deckel 8 eine Kühlvorrichtung auf. Die Kühlvorrichtung besteht aus einer ersten Leitung 22, einer oder mehreren Kühlleitungen 24 im Deckel und einer oder mehreren zweiten Leitungen 26, die in dieser Reihenfolge so miteinander verbunden sind, daß ein Kühlmedium durchleitbar ist. Nach dem Ende des Garvorganges wird durch die erste Leitung 22 ein kaltes Kühlmedium zugeführt, das durch die Kühlleitung 24 im Deckel 8 und weiter durch die zweite Leitung 26 fließt. Das Kühlmedium kann beispielsweise Wasser oder ein anderes geeignetes Fluid sein. Das Kühlmedium kann in einem geschlossenen Kreislauf mit einem außen liegenden Wärmetauscher und einer Umwälzpumpe (nicht dargestellt) umlaufen oder es kann sich beispielsweise um Frischwasser handeln, das dem öffentlichen Leitungssystem entnommen wird, um durch die erste Leitung 22, die Kühlleitung 24 im Deckel 8 und die zweite Leitung 26 zu fließen und anschließend in das Abwassersystem geleitet zu werden. Durch das Kühlmedium wird der Deckel 8 abgekühlt und der im Garraum 4 enthaltende Dampf kondensiert am Deckel 8. Dadurch verringern sich Druck und Temperatur des im Garraum 4 enthaltenen Dampfes. Wenn der Druck im Garraum 4 auf den Umgebungsdruck abgesunken ist, kann der Deckel 8 geöffnet und das Gargut aus dem Garraum 4 entnommen werden.

Der Deckel 8 kann statt einer oder mehrerer Kühlleitungen 24 auch einen anderen geeigneten Hohlraum enthalten oder doppelwandig ausgeführt sein, damit das Kühlmedium durch ihn durchleitbar ist. Ferner können Kühlleitungen 24 alternativ oder zusätzlich in einem anderen Abschnitt der oberen Wand des Druckgargeräts enthalten sein. Beispielsweise ist es möglich, daß der Deckel 8 nur einen Teil der oberen Wand des Druckgargeräts 2 darstellt. Eine oder mehrere Kühlleitungen 24 oder ein geeigneter Hohlraum, durch den das Kühlmedium durchleitbar ist und die bzw. der mit der ersten Leitung 22 und der zweiten Leitung 26 verbunden sind bzw. ist, können bzw. kann dann in einem Abschnitt der oberen Wand des Behälters 6 enthalten sein.

Wenn die obere Wand des Garraumes 4 durch das Kühlmedium ausreichend stark gekühlt wird bzw. die Temperatur, auf die die obere Wand abgekühlt wird, entsprechend gewählt wird, bilden sich an der oberen Wand aus dem dort kondensierten Dampf Tröpfchen, die herabfallen. Diese kühlen Tröpfchen übertragen mit ihrer großen Gesamtoberfläche die Wirkung der Kühlung der oberen Wand auf das gesamte Volumen des Garraumes 4, das sie durchfallen. Dadurch wird die Wirkung der Kühlung der oberen Wand in Hinsicht auf eine rasche Kondensation des im Garraum 4 enthaltenen Dampfes und einen damit verbundenen Druck-und Temperaturabbau im Dampf des Garraumes 4 deutlich vergrößert, so daß sich die Zeitdauer zwischen dem Ende des Garvorganges und dem Öffnen des Deckels 8 zur Entnahme des Gargutes aus dem Druckgargerät 2 nochmals verkürzt.

Die erfindungsgemäße Kühlung von zumindest einem Abschnitt der oberen Wand des Garraumes ist an allen Arten von Druckgargeräten, unabhängig von ihrem sonstigen Aufbau, ihrer Größe, von Aufbau und Art der Heizvorrichtung und der Art des Gargutes einsetzbar.

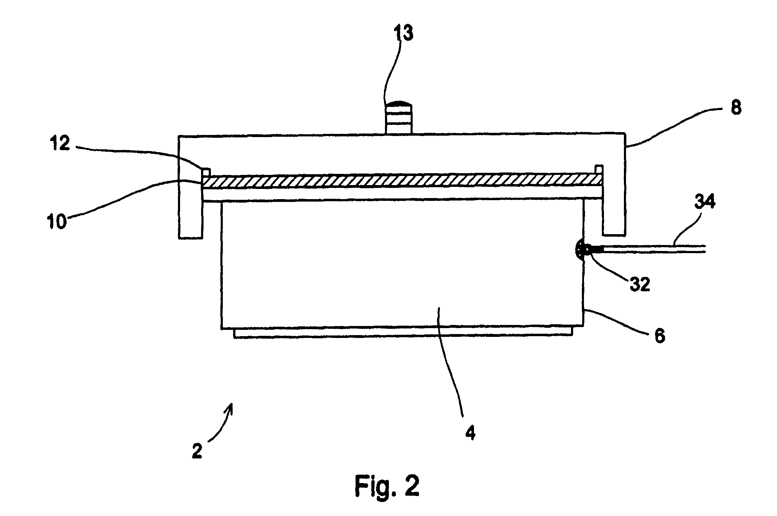

Fig. 2 zeigt ein weiteres bevorzugtes Ausführungsbeispiel der vorliegenden Erfindung. Ein Druckgargerät 2 entspricht mit einem Garraum 4, einem Behälter 6, einem Deckel 8, einem Lippendichtung 10 und einer umlaufenden Nut 12 dem ersten Ausführungsbeispiel, das anhand der Fig. 1 beschrieben wurde. Das Druckgargerät 2 umfaßt erfindungsgemäß ferner eine Düse 32. Durch diese kann von aussen über eine Leitung 34 ein Kühlmedium in den Garraum 4 eingesprüht werden. An der großen Gesamtoberfläche der eingesprühten kühlen Kühlmedium-Tröpfchen kondensiert der im Garraum 4 enthaltene Dampf rasch. Dadurch werden Druck und Temperatur des im Garraum 4 enthaltenen Dampfes abgebaut. Wenn der Druck im Garraum 4 auf den Umgebungsdruck abgesunken ist, kann der Deckel 8 geöffnet und das Gargut aus dem Garraum entnommen werden.

Die Sprühdüse 32 kann an verschiedenen Orten in und an den Wänden des Behälters 6 oder des Deckels 8 angeordnet sein. Sie kann auf eine Wand oder einen Abschnitt einer Wand des Garraumes 4 gerichtet sein. Ferner kann sie durch eine geeignete Vorrichtung beabstandet von den Wänden des Garraumes 4 im Garraum 4 angeordnet sein. Zur weiteren Verbesserung der Wirkung kann eine zweite oder können weitere Sprühdüsen verwendet werden. Das Kühlmedium kann Frischwasser sein, Wasser enthalten oder ein anderes geeignetes Kühlmedium sein.

Das Druckgargerät 2 kann ein beliebiges Druckgargerät mit einem Garraum 4 von beliebigem volumen und beliebiger Gestalt, einem oder mehreren Deckeln, die an beliebigen Stellen des Behälters 6 angeordnet sein können und einer beliebigen innen liegenden oder aussen liegenden Heizquelle sein.

Ferner können die oben beschriebenen Ausführungsbeispiele miteinander kombiniert werden. Insbesondere kann ein Druckgargerät sowohl einen Deckel 8 oder zumindest einen Abschnitt der oberen Wand des Garraums 4 enthalten, durch den, wie im ersten Ausführungsbeispiel anhand Fig. 1 beschrieben, ein Kühlmedium durchleitbar ist, als auch, wie im zweiten Ausführungsbeispiel anhand Fig. 2 beschrieben, eine Sprühdüse 32, durch die ein Kühlmedium in den Garraum 4 eingesprüht werden kann. Das Kühlmedium, das durch zumindest einen Abschnitt der oberen Wand des Garraumes 4 durchleitbar ist und das Kühlmedium, das durch die Sprühdüse 32 in den Garraum 4 gesprüht werden kann, können gleich oder voneinander verschieden sein. Die beiden Kühlmedien können Frischwasser sein, Wasser enthalten oder beliebige andere geeignete Kühlmedien sein.

## Patentansprüche

1. Druckgargerät (2) mit einem Garraum (4) und einer Sprühdüse (32) zum Einbringen eines Kühlmediums in den Garraum (4),**dadurch gekennzeichnet, daß** die Sprühdüse (32) an einer seitlichen Wand angeordnet ist.

2. Druckgargerät (2) gemäß Anspruch 1, bei dem die Sprühdüse (32) auf zumindest eine Wand des Garraumes gerichtet ist.

3. Druckgargerät (2) gemäß Anspruch 1 oder 2, das zumindest eine weitere Sprühdüse zum Einbringen des Kühlmediums aufweist.

4. Druckgargerät (2) gemäß Anspruch 3, bei dem die zumindest eine weiter Sprühdüse (32) an einer unteren Wand, an der oberen Wand des Garraumes (4) oder an einem Deckel (8) des Garraumes (4) angeordnet ist.

5. Druckgargerät (2) gemäß einem der Ansprüche 1 bis 4, bei dem der Garraum (4) eine obere Wand umfaßt, wobei durch zumindest einen Abschnitt (8) der oberen Wand ein Kühlmedium durchleitbar ist.

6. Druckgargerät (2) gemäß Anspruch 5, bei dem der Abschnitt der oberen wand einen Deckel (8) umfaßt.

7. Druckgargerät (2) gemäß Anspruch 5 oder 6, bei dem die Temperatur des Abschnittes (8) der oberen Wand derart gewählt ist, daß sich aus dem an dem Abschnitt (8) der oberen Wand kondensierten Dampf Tröpfchen bilden, die herabfallen, so daß an ihnen im Inneren des Garraumes (4) eine weitere Dampfkondensation stattfindet.

8. Druckgargerät (2) gemäß einem der Ansprüche 1 bis 7, bei dem das Kühlmedium Wasser umfaßt.

9. Druckgargerät (2) gemäß einem der Ansprüche 1 bis 8, das ferner ein Gleichdruckventil zwischen dem Garraum (4) und der Umgebung aufweist.

10. Druckgargerät (2) gemäß einem der Ansprüche 5 bis 9, bei dem das Kühlmedium, das durch den Wandabschnitt (8) fließt, von dem Kühlmedium, das in den Garraum (4) gesprüht wird, verschieden ist.

11. Verfahren zur Dampfkondensation in einem Druckgargerät (2) mit einem Garraum (4), mit dem folgenden Schritt:
Einsprühen eines Kühlmediums in den Garraum (4) durch eine Sprühdüse (32), die an einer seitlichen Wand des Garraums (4) angeordnet ist.

12. Verfahren gemäß Anspruch 11, bei dem das Kühlmedium auf eine Wand des Garraumes gesprüht wird.

13. Verfahren gemäß Anspruch 11 oder 12, bei dem das Kühlmedium ferner durch eine weiter Düse (32) an einer der Wände des Druckgargerätes (2) in den Garraum (4) gesprüht wird.

14. Verfahren gemäß Anspruch 13, bei dem die weitere Düse (32) an einem Deckel (8) des Garraumes (4) angeordnet ist.

15. Verfahren gemäß einem der Ansprüche 11 bis 14, mit dem folgenden Schritt:
Durchleiten eines Kühlmediums durch zumindest einen Abschnitt (8) einer oberen Wand des Garraumes (4).

16. Verfahren gemäß Anspruch 14, bei dem der Abschnitt der oberen Wand einen Deckel (8) umfaßt.

17. Verfahren gemäß einem der Ansprüche 13 bis 18, bei dem das Kühlmedium Wasser enthält.

18. Verfahren gemäß einem der Ansprüche 15 bis 17, bei dem das Kühlmedium, das durch den Abschnitt (8) der oberen Wand des Garraumes geleitet wird, verschieden von dem Kühlmedium, das in den Garraum (4) gesprüht wird, ist.

19. Verfahren gemäß einem der Ansprüche 13 bis 20, das ferner bei Erreichen eines vorbestimmten Druckes im Garraum (4) folgenden Schritt umfaßt:
Öffnen eines Gleichdruckventils (13) zwischen dem Garraum (4) und der Umgebung des Druckgargerätes (2) zum Ableiten von neu entstehendem Dampf.

## Claims

1. Pressure cooking device (2) having a cooking room (4) and a spray nozzle for introducing a cooling medium into the cooking room (4), **characterized in that** the spray nozzle (32) is arranged at a lateral wall.

2. Pressure cooking device (2) according to claim 1, wherein the spray nozzle (32) is directed to ,at least one wall of the cooking room.

3. Pressure cooking device (2) according to claim 1 or 2, at least comprising one further spray nozzle for introducing the cooling medium.

4. Pressure cooking device (2) according to claim 3, wherein the at least one further spray nozzle (32) is arranged at a bottom wall, at the top wall of the cooking room (4) or at a lid (8) of the cooking room (4).

5. Pressure cooking device (2) according to one of claims 1 to 4, wherein the cooking room (4) includes a top wall, wherein a cooling medium may be passed through at least one portion (8) of the top wall.

6. Pressure cooking device (2) according to claim 5, wherein the portion of the top wall includes a lid (8).

7. Pressure cooking device (2) according to claim 5 or 6, wherein the temperature of the portion (8) of the top wall is selected thus that from the steam condensed at the portion (8) of the top wall droplets form which fall down so that at the same a further vapor condensation takes place in the interior of the cooking room (4).

8. Pressure cooking device (2) according to one of claims 1 to 7, wherein the cooling medium includes water.

9. Pressure cooking device (2) according to one of claims 1 to 8, further comprising a balanced pressure valve between the cooking room (4) and the environment.

10. Pressure cooking device (2) according to one of claims 5 to 9, wherein the cooling medium flowing through the wall portion (8) is different from the cooling medium sprayed into the cooking room (4).

11. Method for a vapor condensation in a pressure cooking device (4) having a cooking room (4), comprising the following step:
spraying a cooling medium into the cooking room (4) through a spray nozzle (32) arranged at a lateral wall of the cooking room (4).

12. Method according to claim 11, wherein the cooling medium is sprayed to a wall of the cooking room.

13. Method according to claim 11 or 12, wherein the cooling medium is further sprayed into the cooking room (4) through a further nozzle (32) at one of the walls of the pressure cooking device (2).

14. Method according to claim 13, wherein the further nozzle (32) is arranged at a lid (8) of the cooking room (4).

15. Method according to one of claims 11 to 14, comprising the following step:
passing a cooling medium through at least one portion (8) of a top wall of the cooking room (4).

16. Method according to claim 14, wherein the portion of the top wall includes a lid (8).

17. Method of one of claims 13 to 18, wherein the cooling medium contains water.

18. Method according to one of claims 15 to 17, wherein the cooling medium which is passed through the portion (8) of the top wall of the cooking room is different from the cooling medium sprayed into the cooking room (4).

19. Method according to one of claims 13 to 20, further, when reaching a predetermined pressure in the cooking room (4), including the following step:
opening a balanced pressure valve (13) between the cooking room (4) and the environment of the pressure-cooking device (2) for dissipating newly developing vapor.

## Revendications

1. Autocuiseur (2) avec une chambre de cuisson (4) et un pulvérisateur (32) destiné à introduire un fluide de refroidissement dans la chambre de cuisson (4), **caractérisé par le fait que** le pulvérisateur (32) est disposé sur une paroi latérale.

2. Autocuiseur (2) selon la revendication 1, dans lequel le pulvérisateur (32) est orienté vers au moins une paroi de la chambre de cuisson.

3. Autocuiseur (2) selon la revendication 1 ou 2, présentant au moins un autre pulvérisateur destiné à introduire le fluide de refroidissement.

4. Autocuiseur (2) selon la revendication 3, dans lequel l'au moins un autre pulvérisateur (32) est disposé sur une paroi inférieure, sur la paroi supérieure de la chambre de cuisson (4) ou sur un couvercle (8) de la chambre de cuisson (4).

5. Autocuiseur (2) selon l'une des revendications 1 à 4, dans lequel la chambre de cuisson (4) comporte une paroi supérieure, à travers au moins un segment (8) de la paroi supérieure pouvant être guidé un fluide de refroidissement.

6. Autocuiseur (2) selon la revendication 5, dans lequel le segment de la paroi supérieure comporte un couvercle (8).

7. Autocuiseur (2) selon la revendication 5 ou 6, dans lequel la température du segment (8) de la paroi supérieure est choisie de telle sorte qu'il se forme, à partir de la vapeur condensée au segment (8) de la paroi supérieure, des gouttelettes qui tombent, de sorte qu'ait lieu sur celles-ci, à l'intérieur de la chambre de cuisson (4), une autre condensation de vapeur.

8. Autocuiseur (2) selon l'une des revendications 1 à 7, dans lequel le fluide de refroidissement comporte de l'eau.

9. Autocuiseur (2) selon l'une des revendications 1 bis 8, présentant, par ailleurs, une soupape de compensation de pression entre la chambre de cuisson (4) et le milieu ambiant.

10. Autocuiseur (2) selon l'une des revendications 5 à 9, dans lequel le fluide de refroidissement circulant à travers le segment de paroi (8) est différent du fluide de refroidissement qui est pulvérisé dans la chambre de cuisson (4).

11. Procédé de condensation de vapeur dans un autocuiseur (2) à chambre de cuisson (4), à l'étape suivant consistant à :
introduire par pulvérisation un fluide de refroidissement dans la chambre de cuisson (4) par un pulvérisateur (32) qui est disposé sur une paroi latérale de la chambre de cuisson (4).

12. Procédé selon la revendication 11, dans lequel le fluide de refroidissement est pulvérisé sur une paroi de la chambre de cuisson.

13. Procédé selon la revendication 11 ou 12, dans lequel le fluide de refroidissement est, par ailleurs, pulvérisé par un autre pulvérisateur (32) sur l'une des parois de l'autocuiseur (2) dans la chambre de cuisson (4).

14. Procédé selon la revendication 13, dans lequel l'autre pulvérisateur (32) est disposé sur un couvercle (8) de la chambre de cuisson (4).

15. Procédé selon l'une des revendications 11 à 14, à l'étape suivante consistant à :
faire passer un fluide de refroidissement à travers au moins un segment (8) d'une paroi supérieure de la chambre de cuisson (4).

16. Procédé selon la revendication 14, dans lequel le segment de la paroi supérieure comporte un couvercle (8).

17. Procédé selon l'une des revendications 13 à 18, dans lequel le fluide de refroidissement contient de l'eau.

18. Procédé selon l'une des revendications 15 à 17, dans lequel le fluide de refroidissement qui est guidé à travers le segment (8) de la paroi supérieure de la chambre de cuisson est différent du fluide de refroidissement qui est pulvérisé dans la chambre de cuisson (4).

19. Procédé selon l'une des revendications 13 à 20, comportant, par ailleurs, lorsqu'une pression prédéterminée est atteinte dans la chambre de cuisson (4), l'étape suivante consistant à :
ouvrir une soupape de compensation de pression (13) entre la chambre de cuisson (4) et l'environnement de l'autocuiseur (2), pour évacuer la nouvelle vapeur qui se produit.
